(19) Europäisches Patentamt
European Patent Office
Office européen des brevets

(11) **EP 1 981 811 B1**

(12) **EUROPÄISCHE PATENTSCHRIFT**

(45) Veröffentlichungstag und Bekanntmachung des Hinweises auf die Patenterteilung:
**30.11.2016 Patentblatt 2016/48**

(21) Anmeldenummer: **07703345.4**

(22) Anmeldetag: **08.02.2007**

(51) Int Cl.:
*C01B 31/02* (2006.01)   *F03G 7/00* (2006.01)

(86) Internationale Anmeldenummer:
**PCT/EP2007/001068**

(87) Internationale Veröffentlichungsnummer:
**WO 2007/090639 (16.08.2007 Gazette 2007/33)**

(54) **AKTUATOR MIT NANOSKALIGEN STRUKTUREN**

ACTUATOR COMPRISING NANOSCALE STRUCTURES

ACTIONNEUR COMPORTANT DES STRUCTURES NANOMÉTRIQUES

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **09.02.2006 DE 102006005930**

(43) Veröffentlichungstag der Anmeldung:
**22.10.2008 Patentblatt 2008/43**

(73) Patentinhaber: **Deutsches Zentrum für Luft- und Raumfahrt e.V.**
**51147 Köln (DE)**

(72) Erfinder:
• **MELCHER, Jörg**
**38165 Lehre (Gross Brunsrode) (DE)**

• **RIEMENSCHNEIDER, Johannes**
**38106 Braunschweig (DE)**
• **MAHRHOLZ, Thorsten**
**38228 Salzgitter (DE)**
• **MOSCH, Jürgen**
**38106 Braunschweig (DE)**

(74) Vertreter: **REHBERG HÜPPE + PARTNER**
**Patentanwälte PartG mbB**
**Robert-Gernhardt-Platz 1**
**37073 Göttingen (DE)**

(56) Entgegenhaltungen:
**EP-A- 1 621 875     WO-A-03/043541**
**WO-A-2004/015786     US-A1- 2005 122 007**

EP 1 981 811 B1

## Beschreibung

### TECHNISCHES GEBIET DER ERFINDUNG

Die Erfindung betrifft einen Aktuator mit mindestens einer überwiegend aus Kohlenstoff bestehenden nanoskaligen Struktur, mit einem die nanoskalige Struktur umgebenden Elektrolyten und mit einer ebenfalls in Kontakt mit den Elektrolyten stehenden Gegenelektrode, wobei zwischen der Gegenelektrode und der nanoskaligen Struktur eine Spannung anlegbar ist, die zu einer Längenänderung bei der nanoskaligen Struktur führt.

### STAND DER TECHNIK

Ein Aktuator der eingangs beschriebenen Art ist aus der WO 00/50771 bekannt. Hier besteht die mindestens eine nanoskalige Struktur aus Kohlenstoffnanoröhrchen, so genannten Carbon Nanotubes (CNT). Durch Anlegen einer Spannung zwischen einer Vielzahl solcher CNTs, die in einen Elektrolyten eingebettet sind, und einer an den Elektrolyten angrenzenden Gegenelektrode kommt es durch Bildung einer elektrochemischen Doppelschicht an den Oberflächen der CNTs zu einer mechanischen Dehnung der nanoskaligen Strukturen in Richtung ihrer Hauptachsen (Rohrachsen). Das Maß der Dehnung hängt dabei von der spezifischen zugänglichen Oberfläche der nanoskaligen Strukturen ab. So konnte gezeigt werden, dass eine Vergrößerung der spezifischen zugänglichen Oberfläche eine Erhöhung der aktiven Dehnung nach sich zog. Konkret wurde für so genannte multi-walled Nanotubes, die Außenoberflächen von 50 bis 250 $m^2$ pro Gramm aufweisen, eine um den Faktor 5 niedrigere aktive Dehnung festgestellt als für so genannte single-walled Nanotubes mit einer zugänglichen Außenoberfläche von 800 bis 1.400 $m^2/g$. Weiterhin ist von Aktuatoren der eingangs beschriebenen Art auf Basis von CNTs bekannt, dass sie mit Hilfe ihrer elektrochemischen Anregung zur Längenänderung nur im tiefen Frequenzbereich zu betreiben sind. Die bei der Längenänderung erreichbaren Amplituden nehmen mit steigender Frequenz der anliegenden Spannung drastisch ab. Frequenzen oberhalb 1 Hz beispielsweise ermöglichen nur noch einen Bruchteil der maximalen Dehnungsamplituden.

Die aktuellen Entwicklungsrichtungen, um Aktuatoren der eingangs beschriebenen Art zu optimieren, konzentrieren sich auf CNTs, Gold-Nanopartikel und $C_2O_5$-Nanofasern als nanoskalige Strukturen. Eine Erhöhung der Längenänderung und der Längenänderungsgeschwindigkeit wurde bisher ausschließlich durch Verwendung unterschiedlicher Ionen im Elektrolyten sowie durch spezielle Ansteuerungsalgorithmen beim Anlegen der Spannung untersucht (Raguse, 2003: "Nanoparticle Actuators"; Adv. Mater. 2003, 15, No. 11, June 5).

In der WO 2004/015786 A2 sind elektrische und elektrisch-mechanische Vorrichtungen beschrieben, die supraleitende Kohlenstoffnanoröhrchen (SCNT) umfassen. Bei den offenbarten elektrisch-mechanischen Vorrichtungen verläuft ein nicht elektrisch kontaktiertes SCNT parallel zu einem Supraleiter, und unterschiedliche Ströme durch den Supraleiter lenken den nicht elektrisch kontaktierten SCNT in Richtung seines Abstands zu dem Supraleiter unterschiedlich stark aus. Weiterhin wird beschrieben, dass die SCNT zur Ausbildung eines phasenkohärenten supraleitenden Materials verwendet werden können, indem sie in dichter Packung spiralförmig angeordnet werden, wozu ein Bündel aus dem SCNT spiralförmig auf einen stabilisierenden zylinderförmigen Träger aufgewickelt wird. Zur Ausbildung eines Wellenleiters können die SCNT koaxial zueinander, d. h. ineinander angeordnet werden, wobei die innersten SCNT eine innere Elektrode und die äußersten SCNT eine äußere Elektrode ausbilden können, zwischen denen eine elektrische Isolation vorgesehen ist, längs der sich die Wellen ausbreiten.

### AUFGABE DER ERFINDUNG

Der Erfindung liegt die Aufgabe zugrunde, einen Aktuator der eingangs beschriebenen Art aufzuzeigen, bei dem seitens der nanoskaligen Strukturen größere Längenänderungen erreicht werden.

### LÖSUNG

Erfindungsgemäß wird die Aufgabe durch einen Aktuator mit dem Merkmal des unabhängigen Patentanspruchs 1 gelöst. Bevorzugte Ausführungsformen des neuen Aktuators sind in den abhängigen Patentansprüchen 2 bis 10 beschrieben.

### BESCHREIBUNG DER ERFINDUNG

Bei dem neuen Aktuator sind die nanoskaligen Strukturen aus Kohlenstoff Helikoide. Helikoide unterscheiden sich von den bislang im Wesentlichen eingesetzten Nanotubes dadurch, dass sie keine inneren und damit für die Ausbildung einer elektrochemischen Doppelschicht nicht zugänglichen Oberflächen aufweisen. Durch die zwischen den nanoskaligen Strukturen und der Gegenelektrode über den Elektrolyten angelegte Spannung wandern Ionen des Elektrolyten zu dem ihnen entsprechenden Pol. Die zu den nanoskaligen Strukturen wandernden Ionen bilden an der Oberfläche der nanoskaligen Strukturen die chemische Doppelschicht, die die gewünschte Längenänderung zur Folge hat. Je größer die spezifische für die Ionen erreichbare Oberfläche der nanoskaligen Strukturen ist, desto größer ist die erzielbare Längenänderung.

Neben der spezifischen für die Ionen erreichbaren Oberfläche der nanoskaligen Strukturen bestimmt auch die Art des Elektrolyten, z. B. durch die Größe seiner Ionen, deren Ladungszahl und sein Lösungsmittel, die erreichbare Längenänderung und deren Geschwindigkeit. Die vorliegende Erfindung nutzt jedoch als vornehmlichen Faktur zur Erhöhung der Längenänderung die räumliche Gestalt der nanoskaligen Strukturen. Helikoide weisen ausschließlich äußere und damit für die Ionen des Elektrolyten leicht und schnell erreichbare Oberflächen auf. Genauso wichtig ist es, dass die Ionen des Elektrolyten sich von diesen Oberflächen auch wieder leicht und schnell entfernen können, wenn eine geringere oder gar eine Gegenspannung zwischen den nanoskaligen Strukturen und der Gegenelektrode angelegt wird. Gegenüber einem Nanotube weist ein Helikoid nicht nur eine erheblich vergrößerte spezifische zugängliche Oberfläche pro Gramm seines Gewichts sondern insbesondere auch pro von ihm eingenommenem Volumen auf. Ein Helikoid stellt ein Maximum an zugänglicher Oberfläche pro Volumen bei einer nanoskaligen Struktur mit zweidimensionaler Ausdehnung ihrer Oberflächen und ausgeprägter Hauptachse bereit. Zudem sind auch die Potentialverhältnisse bei der Annäherung eines Ions an der Oberfläche eines Helikoiden, soweit sie durch die Gestalt der Oberfläche vorgegeben werden, so, dass es keine ausgeprägten Potentialsenken gibt, die die Beweglichkeit der Ionen zu und von der Oberfläche eines Helikoiden stärker beeinflussen würden, als es durch eine zur Ansteuerung eines gattungsgemäßen Aktuators angelegte äußere Spannung der Fall ist. Bei einem Helikoiden sind zwar die Oberflächen nicht direkt in Richtung seiner Hauptachse ausgerichtet, so dass eine Oberflächenvergrößerung aufgrund der Ausbildung einer elektrochemischen Doppelschicht nicht direkt zu einer Längenveränderung in Richtung seiner Hauptachse führt, aber auch die Längenänderungen, die bei einem Helikoiden längs seiner Wendel um seine Hauptachse herum erfolgen, sind beispielsweise bei einem Mikroaktuator nutzbar, und selbst die bei einem Helikoiden in Richtung seiner Hauptachse resultierenden Längenänderungen gehen weit über das hinaus, was bei einem Nanotube zu erreichen ist.

Die erfindungsgemäßen Helikoide sind insbesondere solche, bei denen es sich um Minimalflächen im differenzialgeometrischen Sinn handelt und deren Parameterform:

$$x\,(u, v) = \sin\,(n * u) * \sinh\,(v)$$

$$y\,(u, v) = \cos\,(n * u) * \sinh\,(v)$$

$$z\,(u) = m * u$$

lautet, wobei für einen regelmäßigen Helikoiden die Parameter u und v beispielsweise die Werte $u \in [0,4\,\pi]$, $v \in [-1,1]$ annehmen.

Der Parameter v liefert den Durchmesser der Windungen des Helikoiden und ihre Symmetrie bzw. Gleichmäßigkeit. Mit dem Parameter u lässt sich die Anzahl der Windungen einstellen. Mit Hilfe von n und m ist die Ganghöhe der Wendel des Helikoiden festlegbar.

Bei dem neuen Aktuator kann ein einziger Helikoid als nanoskalige Struktur vorgesehen sein, um beispielsweise einen Mikroaktuator für eine lineare Bewegung in Richtung seiner Hauptachse oder für eine rotatorische Bewegung um seine Hauptachse herum auszubilden. In vielen Ausführungsformen des neuen Aktuators wird jedoch eine Mehrzahl von Helikoiden vorliegen, deren konzertierte Aktion eine makroskopische Längenänderung oder eine Längenänderung mit makroskopischen Kräften hervorruft. Die Zahl der Helikoide kann dabei auch sehr groß sein und einige hundert oder tausend erreichen.

Wenn der neue Aktuator mehrere Helikoide aufweist, so müssen diese nicht in einer geordneten Form vorliegen, sie können auch entsprechend so genannten Bucky-Papieren zweidimensional ungeordnet in einer Ebene angeordnet sein. Bevorzugt ist es jedoch, wenn die Helikoide des neuen Aktuators mit ihnen Hauptachsen parallel zueinander ausgerichtet sind.

Dabei können die Helikoide an ihrem einen Ende an einer gemeinsamen Basis gelagert sein. Über diese Basis kann dann auch die elektrische Kontaktierung für die Anlegung der Spannung erfolgen. Zum Abnehmen der Längenänderung der Helikoide längs ihrer Hauptachsen kann ein zweites Element gegenüber der Basis angeordnet werden, das jedoch mit den Helikoiden nicht starr verbunden sein kann, weil diese überlagert mit ihrer Längenänderung in Richtung ihrer Hauptachse eine Drehbewegung um ihre Hauptachse vollführen.

Bei den Helikoiden des neuen Aktuators kann ein Verhältnis von Ganghöhe zum Radius der Helikoide innerhalb eines bevorzugten Bereichs von 0,5 bis 2 vorliegen. Dabei kann die Ganghöhe der Helikoide die Größenordnung eines Nanometers haben, also insbesondere in dem Bereich von 0,5 bis 2 nm liegen.

Verglichen mit ihrer Ganghöhe und ihrem Durchmesser sind die Helikoide des neuen Aktuators typischerweise sehe lang. Konkret kann ihre Länge in dem Bereich von 1 bis 1.000 $\mu$m liegen, wobei ein Bereich von 5 bis 200 $\mu$m, d. h. ungefähr 100 $\mu$m bevorzugt ist. Die Helikoide weisen demnach eine Vielzahl von Windungen um ihre Hauptachse zwischen ihren beiden Enden auf, die im Regelfall weit über 1.000 liegt.

Die Helikoide des neuen Aktuators bestehen typischerweise aus einer Einzellage aus graphitischem Kohlenstoff, in der die Kohlenstoffatome in einer hexagonalen Anordnung vorliegen. Um die helikoide Raumform der nanoskaligen Strukturen bei den neuen Aktuator zu erreichen, ist der Kohlenstoff mit Fremdatomen mindestens eines Elements dotiert und/oder die hexagonale Anordnung des Kohlenstoffs weist Gitterfehlstellen auf, um auf diese Weise Spannungen in die Oberfläche einzubringen, die durch die helikoide Raumform minimiert werden. Die grundsätzliche Herstellbarkeit von helikoiden Nanostrukturen ist aus dem Stand der Technik bekannt (vgl. Terrones, H., Terrones, M., 2003: "Curved nanostructured materials", New J. Phys. 5 (2003), 126, PII: S1367-2630 (03) 65766-6).

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

## KURZBESCHREIBUNG DER FIGUREN

Im Folgenden wird die Erfindung anhand in den Figuren dargestellter bevorzugter Ausführungsbeispiele weiter erläutert und beschrieben.

Fig. 1     zeigt schematisch den Aufbau einer Ausführungsform des neuen Aktuators mit schematischer Wiedergabe seiner Helikoide.

Fig. 2     zeigt einen Abschnitt eines bei dem Aktuator gemäß Fig. 1 einsetzbaren Helikoiden.

Fig. 3     zeigt einen Abschnitt eines anderen bei dem Aktuator gemäß Fig. 1 einsetzbaren Helikoiden.

Fig. 4     zeigt einen vollständigen bei dem Aktuator gemäß Fig. 1 einsetzbaren Helikoiden; und die

Fig. 5 bis 9     zeigen andere Ausführungsformen von Helikoiden, die bei dem Aktuator gemäß Fig. 1 einsetzbar sind.

## FIGURENBESCHREIBUNG

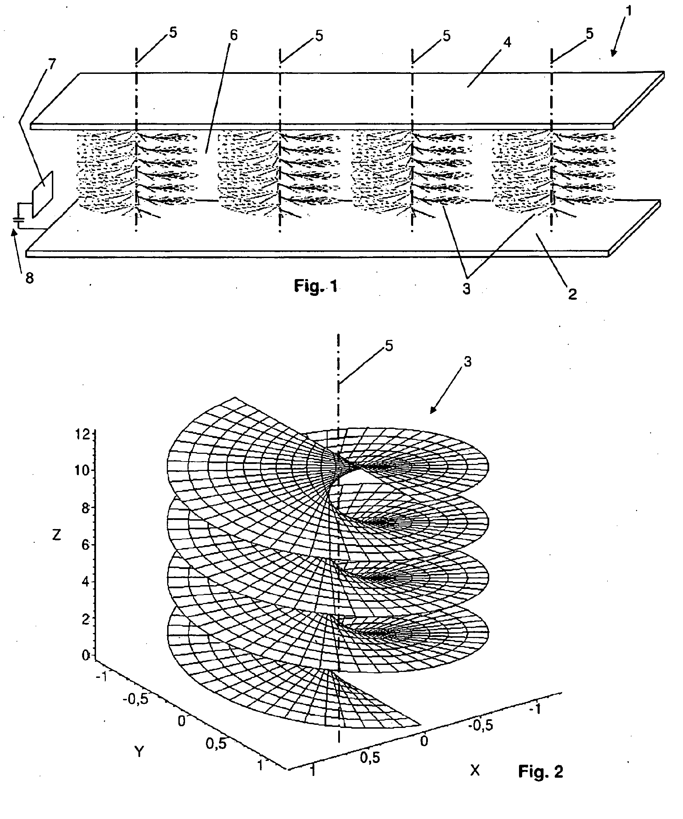

Der in Fig. 1 dargestellte Aktuator 1 weist eine Basis 2 auf, von der sich eine Mehrzahl von Helikoiden 3 zu einer der Basis 2 gegenüberliegenden Gegenplatte 4 erstreckt. Die Helikoide 3 sind durch Aufwachsen auf die Basis 2 ausgebildet und mit der Basis 2 fest verbunden, während die Gegenplatte 4 ohne feste Verbindung auf den Helikoiden 3 aufliegt. Dabei ist die Gegenplatte 4 vorzugsweise durch eine hier nicht dargestellte Führung in Richtung der Hauptachsen 5 der Helikoide 3, die normal sowohl zu der Basis 2 als auch der Gegenplatte 4 verläuft, axial geführt. Die Helikoide 3 sind in einen hier nicht zeichnerisch hervorgehobenen Elektrolyten 6 eingebettet, der sich seitlich bis an eine hier nur schematisch wiedergegebene Gegenelektrode 7 erstreckt. Mit einer Spannungsquelle 8 ist eine Spannung zwischen der Gegenelektrode 7 und den Helikoiden 3 anlegbar, aufgrund derer sich Ionen aus dem Elektrolyten 6 unter Ausbildung einer elektrochemischen Doppelschicht an die Oberfläche der Helikoide 3 anlagern. Durch die Ausbildung der Doppelschicht wächst die Oberfläche der Helikoide 3 an. In der Folge kommt es zu einer Längenveränderung der Helikoide 3 in Richtung ihrer Hauptachse, wobei sich die an der Gegenplatte 4 anliegenden freien Enden der Helikoide 3 wie beim Strecken einer Schraubenfeder um die Hauptachsen 5 herum bewegen, allerdings in einer im Vergleich zu der Schraubenfeder entgegengesetzten Drehrichtung, da sich hier die Oberfläche der Helikoide 3 vergrößert.

Die für den Aktuator 1 gemäß Fig. 1 geeigneten Helikoide sind Minimalflächen im differentialgeometrischen Sinn, deren Parameterform

$$x\,(u, v) = \sin\,(n * u) * \sinh\,(v)$$

$$y\,(u, v) = \cos\,(n * u) * \sinh\,(v)$$

$$z\,(u) = m * u$$

lautet. Bei dem in **Fig. 2** dargestellten Helikoid 3 haben die Parameter u und v beispielsweise die Werte $u \in [0,4\,\pi]$, $v \in [-1,1]$, mit m = m = 1. Der Parameter v liefert grundsätzlich den Durchmesser des Helikoids 3 und die Symmetrie bzw. die Gleichmäßigkeit seiner Windungen. Mit dem Parameter u lässt sich die Anzahl der Windungen einstellen. Mit Hilfe von n und m ist die Ganghöhe beeinflussbar.

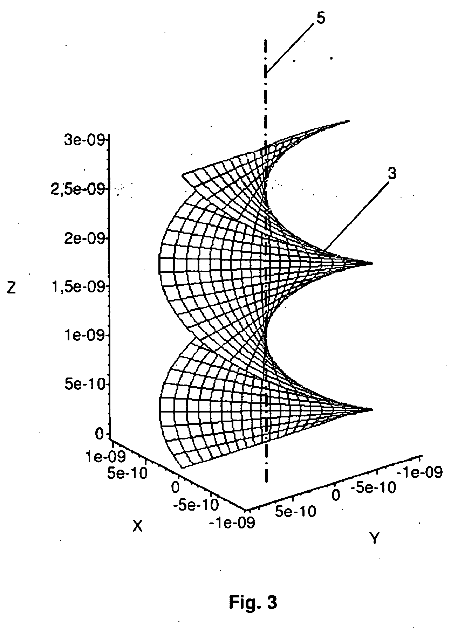

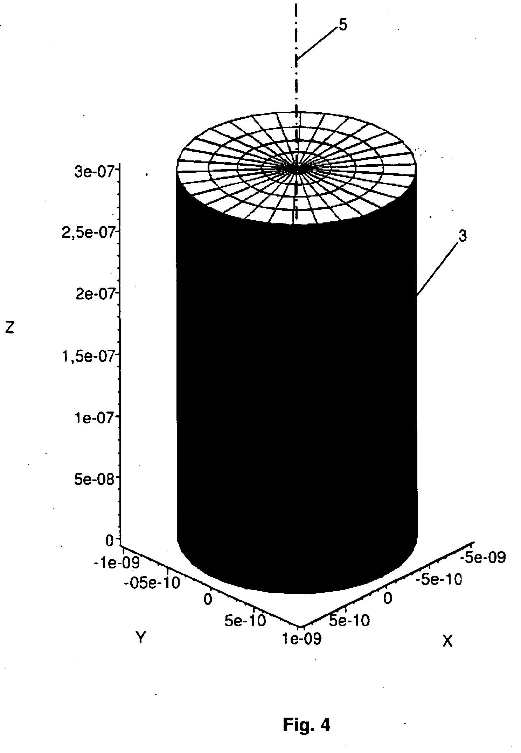

Die bis hierher dargestellten Helikoide 3 weisen nicht die bei dem neuen Aktuator übliche sehr große Anzahl von Windungen auf. Ein kurzer Abschnitt eines typischen Helikoiden 3 ist stark vergrößert in **Fig. 3** dargestellt; und **Fig. 4** zeigt einen längeren Abschnitt desselben Helikoiden 3, wobei sich der Maßstab der beiden

Figuren 3 und 4 in der zu der Hauptachse 5 des Helikoiden 3 parallelen z-Richtung stark unterscheidet. In Fig. 4 ist der Maßstab der z-Achse um einen Faktor $10^{-2}$ gegenüber den beiden anderen Achsen vergrößert, um die Darstellung eines längeren Abschnitts des Helikoiden zu ermöglichen. Konkret weist der Helikoid 3 gemäß den Figuren 3 und 4 eine Ganghöhe von 1 nm bei einem Radius von ebenfalls 1 nm auf. Die Wendeldicke, die in den Figuren nicht berücksichtigt ist, beträgt entsprechend dem Kohlenstoffatomradius etwa 1 A. Die Länge des Aktuators beträgt 100 μm. Die in allen Figuren zur Darstellung des Flächenverlaufs des Helikoiden 3 verwendeten Linien mit festem Abstand bzw. radialem Verlauf zu der Hauptachse 5 sind keine realen Strukturen des Helikoiden 3. Dieser besteht vielmehr aus einer graphitischen Monolage von in einer hexagonalen Anordnung befindlichen Kohlenstoffatomen. Dabei sind in der hexagonalen Anordnung Gitterfehlstellen und/oder Dotierungsatome mit anderem Atomradius vorhanden, um der Monolage den gewünschten helekoid gekrümmten Verlauf in ihrem Formpotentialminimum zu geben.

**[0023]** Auch in Fig. 4 ist der Helikoid 3 nur bis zu seiner Länge von 300 nm dargestellt. Er weist, was aus dieser Darstellung aufgrund des vergrößerten Maßstabs der z-Achse nicht direkt hervorgeht, eine extrem große für die Einlagerung von Ionen aus dem Elektrolyten 6 gemäß Fig. 1 zugängliche Oberfläche auf. Er hat nicht, wie dies aus Fig. 4 hervorzugehen scheint, nur eine zylindermantelförmige zugängliche Oberfläche.

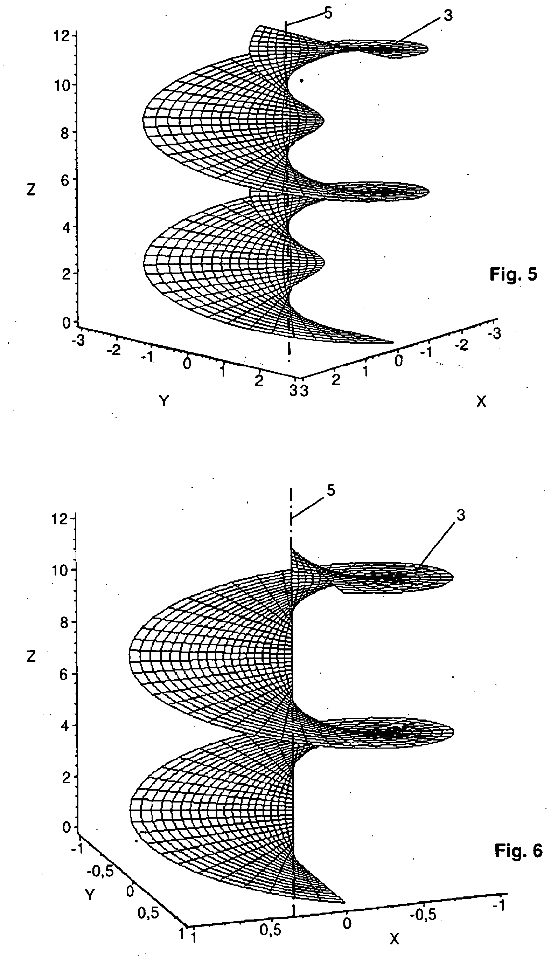

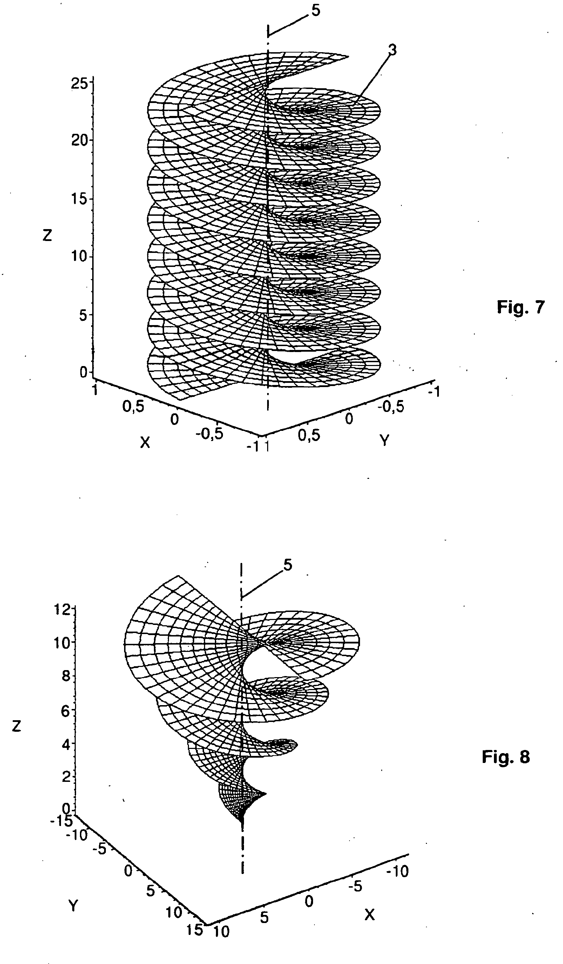

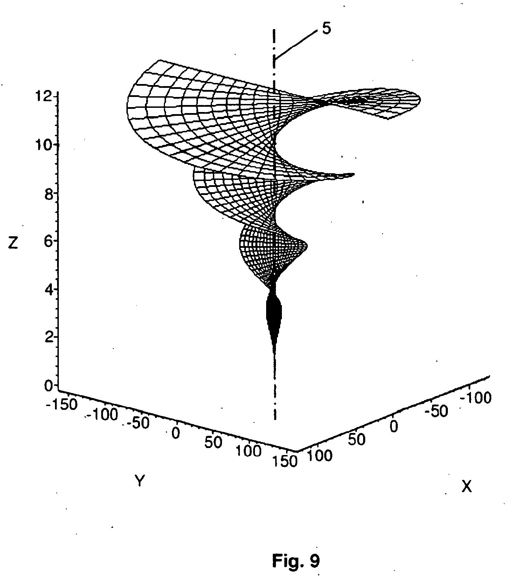

**[0024]** Die **Figuren 5** bis **9** zeigen weitere mögliche Ausführungsformen des Helikoiden 3 für den Aktuator gemäß Fig. 1, wobei jeweils nur ein kurzer Abschnitt des Helikoiden 3 längs seiner Hauptachse 5 wiedergegeben ist. Unter der jeweiligen Darstellung des Helikoiden 3 findet sich die Wahl der die Form des jeweiligen Helikoiden 3 bestimmenden Parameter. Diese Helikoide sind für den neuen Aktuator gemäß Fig. 1 ebenfalls verwendbar, wenn auch nicht alle in gleichem Maße.

**[0025]** Ebenso wenig, wie Fig. 1 die typische Windungsanzahl der Helikoide 3 korrekt wiedergibt, spiegelt sie die typische Anzahl von Helikoiden bei dem Aktuator 1 korrekt wieder. Tatsächlich ist typischerweise eine sehr große Anzahl von Helikoiden 3 in einer zweidimensionalen Anordnung mit parallel zueinander ausgerichteten Hauptachsen 5 vorgesehen. Dabei ist es nicht einmal zwingend, dass die Hauptachsen 5 exakt parallel zueinander ausgerichtet sind. Sie können durchaus auch unter kleinen Windungen zueinander stehen, ohne damit die Funktion des Aktuators 1 wesentlich zu beeinträchtigen.

**[0026]** Der Aktuator kann grundsätzlich auch in Form eines so genannten Bucky-Papiers ausgebildet sein, bei dem die einzelnen Helikoide 3 mit ihren Hauptachsen 5 im Wesentlichen in einer Ebene ausgerichtet sind, aber innerhalb der Ebene keine feste Orientierung haben. Ein solches Bucky-Papier vergrößert bei Spannungsbeaufschlagung in einem Elektrolyten seine Fläche.

## BEZUGSZEICHENLISTE

**[0027]**

1 Aktuator
2 Basis
3 Helikoid
4 Gegenplatte
5 Hauptachse
6 Elektrolyt
7 Gegenelektrode
8 Spannungsquelle

## Patentansprüche

1. Aktuator mit mindestens einer überwiegend aus Kohlenstoff bestehenden nanoskaligen Struktur, mit einem die nanoskalige Struktur umgebenden Elektrolyten und mit einer ebenfalls in Kontakt mit dem Elektrolyten stehenden Gegenelektrode, wobei zwischen der Gegenelektrode und der nanoskaligen Struktur eine Spannung anlegbar ist, die zu einer Längenänderung bei der nanoskaligen Struktur führt, **dadurch gekennzeichnet, dass** die mindestens eine nanoskalige Struktur ein Helikoid (3) ist.

2. Aktuator nach Anspruch 1, **dadurch gekennzeichnet, dass** mehrere Helikoide (3) vorgesehen sind, zwischen denen und der Gegenelektrode die Spannung anlegbar ist

3. Aktuator nach Anspruch 2, **dadurch gekennzeichnet, dass** mindestens 100, vorzugsweise mindestens 1.000 Helikoide, vorgesehen sind.

4. Aktuator nach Anspruch 2 oder 3, **dadurch gekennzeichnet, dass** die Helikoide (3) mit ihren Hauptachsen (5) parallel zueinander ausgerichtet sind.

5. Aktuator nach Anspruch 4, **dadurch gekennzeichnet, dass** die Helikoide (3) an ihrem einen Ende an einer gemeinsamen Basis (2) gelagert sind.

6. Aktuator nach einem der Ansprüche 1 bis 5, **dadurch gekennzeichnet, dass** das Verhältnis von Ganghöhe zu Radius bei dem Helikoiden (3) innerhalb eines Bereichs von 0,5 bis 2 liegt.

7. Aktuator nach einem der Ansprüche 1 bis 6, **dadurch gekennzeichnet, dass** die Ganghöhe des Helikoiden (3) von 0,5 bis 2 nm beträgt.

8. Aktuator nach einem der Ansprüche 1 bis 7, **dadurch gekennzeichnet, dass** die Länge des Helikoiden (3) von 1 bis 1.000 μm beträgt.

9. Aktuator nach Anspruch 8, **dadurch gekennzeich-**

**net, dass** die Länge des Helikoiden (3) mindestens 50 μm beträgt.

10. Aktuator nach einem der Ansprüche 1 bis 9, **dadurch gekennzeichnet, dass** der Helikoid (3) aus einer Monolage von graphitischem Kohlenstoff mit Gitterfehlstellen und/oder Dotierungsfremdatomen besteht.

## Claims

1. Actuator comprising at least one nanoscale structure predominantly consisting of carbon, comprising an electrolyte enclosing the nanoscale structure, and comprising a counter-electrode also being in electrical contact with the electrolyte, wherein a voltage resulting in a change of length in the nanoscale structure is applicable between the counter-electrode and the nanoscale structure, **characterised in that** the at least one nanoscale structure is a helicoid (3).

2. Actuator of claim 1, **characterised in that** a plurality of helicoids (3) is provided, the voltage being applicable between them and the counter-electrode.

3. Actuator of claim 2, **characterised in that** at least 100, preferably at least 1,000 helicoids are provided.

4. Actuator of claim 2 or 3, **characterised in that** the helicoids (3), with their main axes (5), are arranged in parallel to each other.

5. Actuator of claim 4, **characterised in that** the helicoids (3), at their one ends, are supported at a common basis (2).

6. Actuator of any of the claims 1 to 5, **characterised in that** the ratio of pitch to radius in the helicoid (3) is in a range from 0.5 to 2.

7. Actuator of any of the claims 1 to 6, **characterised in that** the pitch of the helicoid (3) is between 0.5 and 2 nm.

8. Actuator of any of the claims 1 to 7, **characterised in that** the length of the helicoid (3) is between 1 and 1,000 μm.

9. Actuator of claim 8, **characterised in that** the length of the helicoid (3) is at least 50 μm.

10. Actuator of any of the claims 1 to 9, **characterised in that** the helicoid (3) consists of a mono layer of graphitic carbon with lattice discontinuities and/or foreign atom dopants.

## Revendications

1. Actionneur avec au moins une structure nanométrique constituée principalement de carbone, avec un électrolyte entourant la structure nanométrique et avec une contre-électrode également en contact avec l'électrolyte, une tension, qui conduit à une variation de longueur au niveau de la structure nanométrique, pouvant être appliquée entre la contre-électrode et la structure nanométrique, **caractérisé en ce que** l'au moins une structure nanométrique est un hélicoïde (3).

2. Actionneur selon la revendication 1, **caractérisé en ce que** plusieurs hélicoïdes (3) sont prévus, la tension pouvant être appliquée entre ceux-ci et la contre-électrode.

3. Actionneur selon la revendication 2, **caractérisé en ce qu'**au moins 100, de préférence au moins 1000 hélicoïdes sont prévus.

4. Actionneur selon la revendication 2 ou 3, **caractérisé en ce que** les hélicoïdes (3) sont orientés avec leurs axes principaux (5) parallèles entre eux.

5. Actionneur selon la revendication 4, **caractérisé en ce que** les hélicoïdes (3) sont logés au niveau d'une de leur extrémité sur une base commune (2).

6. Actionneur selon l'une des revendications 1 à 5, **caractérisé en ce que** le rapport entre le pas et le rayon de l'hélicoïde (3) est de 0,5 à 2.

7. Actionneur selon l'une des revendications 1 à 6, **caractérisé en ce que** le pas de l'hélicoïde (3) est de 0,5 à 2 nm.

8. Actionneur selon l'une des revendications 1 à 7, **caractérisé en ce que** la longueur de l'hélicoïde (3) est de 1 à 1000 μm.

9. Actionneur selon la revendication 8, **caractérisé en ce que** la longueur de l'hélicoïde (3) est d'au moins 50 μm.

10. Actionneur selon l'une des revendications 1 à 9, **caractérisé en ce que** l'hélicoïde (3) est constitué d'une mono-couche de carbone graphitique avec des défauts de réseau et/ou des impuretés de dopage.

**Fig. 1**

**Fig. 2**

**Fig. 3**

**Fig. 4**

Fig. 5

Fig. 6

**Fig. 7**

**Fig. 8**

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0050771 A

- WO 2004015786 A2

**In der Beschreibung aufgeführte Nicht-Patentliteratur**

- **RAGUSE.** Nanoparticle Actuators. *Adv. Mater.,* 2003, vol. 15 (11

- **TERRONES, H. ; TERRONES, M.** Curved nanostructured materials. *New J. Phys.,* 2003, vol. 5 (126), S1367-2630